(19) Europäisches Patentamt
European Patent Office
Office européen des brevets

(11) **EP 3 162 489 B1**

(12) **EUROPEAN PATENT SPECIFICATION**

(45) Date of publication and mention
of the grant of the patent:
**06.05.2020 Bulletin 2020/19**

(21) Application number: **15814944.3**

(22) Date of filing: **25.06.2015**

(51) Int Cl.:
**B23K 28/02** *(2014.01)*    **B23K 9/18** *(2006.01)*
**B23K 26/21** *(2014.01)*    **C22C 38/00** *(2006.01)*
**C22C 38/14** *(2006.01)*

(86) International application number:
**PCT/JP2015/003203**

(87) International publication number:
**WO 2016/002171 (07.01.2016 Gazette 2016/01)**

(54) **METHOD OF BUTT WELDING STEEL PLATES AND BUTT WELD JOINT OF STEEL PLATES**

VERFAHREN ZUM STUMPFSCHWEISSEN VON STAHLPLATTEN UND STUMPFSCHWEISSNAHT VON STAHLPLATTEN

PROCÉDÉ DE SOUDAGE EN BOUT DE PLAQUES D'ACIER ET JOINT SOUDÉ EN BOUT DE PLAQUES D'ACIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2014 JP 2014133632**

(43) Date of publication of application:
**03.05.2017 Bulletin 2017/18**

(73) Proprietor: **JFE Steel Corporation**
**Tokyo 100-0011 (JP)**

(72) Inventors:
• **KOZUKI, Shohei**
**Tokyo 100-0011 (JP)**
• **HAYAKAWA, Naoya**
**Tokyo 100-0011 (JP)**
• **OI, Kenji**
**Tokyo 100-0011 (JP)**

(74) Representative: **Haseltine Lake Kempner LLP**
**Bürkleinstrasse 10**
**80538 München (DE)**

(56) References cited:
JP-A- H09 168 878    JP-A- 2005 146 407
JP-A- 2011 161 500    JP-A- 2013 119 658
JP-A- 2013 119 658    JP-A- 2014 510 642
JP-B2- 3 238 215    JP-B2- 4 977 876

**Description**

TECHNICAL FIELD

The disclosure relates to a method of butt welding steel plates and a butt weld joint of steel plates. The disclosure particularly relates to a butt welding method for obtaining weld metal with excellent toughness using submerged arc welding and laser welding, and a butt weld joint of steel plates obtained by the method.

BACKGROUND

Laser welding has high energy density, and accordingly is receiving attention as high-efficiency welding technology with high welding speed and deep penetration. Laser welding also has little thermal (heat) effect, and so is advantageous in that a weld joint without deformation or strain caused by heat can be formed.

However, laser welding has the following problem. Since laser welding has small heat input as compared with other welding methods (such as arc welding), the cooling rate after welding is high, and as a result the weld metal hardens and degrades in toughness. This has stimulated the study of techniques for forming weld metal with favorable toughness by laser welding.

For example, JP 2003-200284 A (PTL 1) discloses a technique of laser welding steel plates to form weld metal whose Ti content, B content, Ceq value, and ratio of A1 content and O (oxygen) content are in predetermined ranges and that has a fine acicular ferrite structure, thus improving toughness. This technique, however, needs to adjust the contents of elements added to the steel plates in order to keep the Ceq value of the weld metal in an appropriate range, and has a problem in that the effect of improving the toughness of the weld metal may not be achieved in its application to typical steel plates for a welded structure.

JP 2008-184672 A (PTL 2) discloses a technique of laser welding steel plates having defined contents of additive elements and Ceq value to form weld metal in which a small amount of carbide and isolated martensite are dispersed in a fine austenite structure, thus improving toughness. This technique, however, needs to adjust the contents of various elements in order to keep the Ceq value of the steel plates in an appropriate range, and has a problem in that the effect of improving the toughness of the weld metal may not be achieved in its application to typical steel plates for a welded structure.

JP 2008-168319 A (PTL 3) discloses a technique of butt welding steel plates by a combination of laser welding and arc welding (such as gas-shielded metal arc welding or submerged arc welding) to suppress welding defects. This technique joins the steel plates at a root face portion located at the center of an X groove by laser welding, and then joins the steel plates at an opening portion located on each of both sides by arc welding. However, the technique has a problem of being susceptible to weld metal hardening, that is, toughness degradation, because the components of the weld metal formed by each of gas-shielded metal arc welding and laser welding are not defined.

JP H6-114587 A (PTL 4) discloses a technique of butt welding steel plates by a combination of laser welding and gas-shielded metal arc welding to suppress weld metal cracking. This technique joins the steel plates at a root face portion located in the lower part of a Y groove by laser welding, and then joins the steel plates at an opening portion located in the upper part by gas-shielded metal arc welding. However, the technique equally has a problem of being susceptible to weld metal hardening, that is, toughness degradation, because the components of the weld metal formed by each of gas-shielded metal arc welding and laser welding are not defined.

JP 2008-248315 (PTL5) which is considered to be the closest prior art and forms the basis for the preamble of claim 1, discloses a method for manufacturing a welded steel pipe for line pipe having >=900MPa tensile strength, the method comprising forming steel sheet into a pipe shape by cold working and welding using a weld metal having a particular chemical composition by a hybrid welding process.

JP H9-168878 (PTL6) discloses a method of producing a duplex stainless steel welded tube by laser beam welding and arc welding.

JP 2013-119658 (PTL7) discloses a method of producing a high strength welded steel pipe intended to have excellent hydrogen induced cracking resistance and sulphide stress corrosion cracking resistance.

CITATION LIST

Patent Literatures

PTL 1: JP 2003-200284 A
PTL 2: JP 2008-184672 A

PTL 3: JP 2008-168319 A
PTL 4: JP H6-114587 A
PTL 5: JP 2008-248315
PTL 6: JP H9-168878
PTL 7: JP 2013-119658

SUMMARY

(Technical Problem)

It could be helpful to provide a method of butt welding steel plates that can improve the toughness of weld metal while utilizing the advantages of laser welding such as high efficiency and little deformation and strain, and a butt weld joint of steel plates obtained by the method.

(Solution to Problem)

As a result of keen examination, we discovered that, by:

(a) setting the groove shape to a Y groove having an opening portion in the upper part and a root face portion in the lower part of two steel plates, and joining the two steel plates at the opening portion of the Y groove by submerged arc welding and then joining the two steel plates at the root face portion of the Y groove by laser welding;
(b) appropriately keeping the Ti content and B content of the weld metal formed by the submerged arc welding (hereafter referred to as "submerged arc weld metal") and adjusting the ratio of the A1 content and the O (oxygen) content of the submerged arc weld metal; and
(c) causing the weld metal formed by the laser welding (hereafter referred to as "laser weld metal") to enter into the submerged arc weld metal in the aforementioned (b),
laser weld metal of a fine acicular ferrite structure can be formed to improve toughness.
We also discovered that, by
(d) appropriately keeping the penetration depth of the laser welding and the depth (hereafter referred to as "entry depth") to which the laser weld metal enters into the submerged arc weld metal,
the toughness of the laser weld metal and therefore the toughness of the butt weld joint can be further improved.

The disclosure is based on the aforementioned discoveries.
We provide the following:

1. A method of butt welding steel plates, the method including: butting two steel plates together, to form a Y groove having an opening portion in an upper part and a root face portion in a lower part; joining the two steel plates at the opening portion of the Y groove by submerged arc welding, to form submerged arc weld metal whose Ti content is 0.030 mass% to 0.100 mass%, B content is 0.0030 mass% to 0.0080 mass%, and [%A1]/[%O] is in a range of 0.5 to 1.2 where [%A1] is A1 content in mass% and [%O] is O content in mass%; and joining the two steel plates at the root face portion of the Y groove by laser welding, to form laser weld metal so that the laser weld metal enters into the submerged arc weld metal.
2. The method of butt welding steel plates according to the foregoing 1, wherein [%Ti], d, and p satisfy

$$p \geq (0.010 / [\%Ti]) \times d$$

where [%Ti] is the Ti content of the submerged arc weld metal in mass%, d is a penetration depth of the laser welding in mm, and p is an entry depth to which the laser weld metal enters into the submerged arc weld metal in mm.
3. A butt weld joint of steel plates that is formed by joining by the method of butt welding steel plates according to the foregoing 1 or 2, wherein the butt weld joint comprises submerged arc weld metal (4) formed as a larger weld portion in the opening portion (2) and laser weld metal (5) formed as a smaller weld portion in the root face portion (3), and wherein the smaller weld portion extends into the larger weld portion in the plate thickness direction and has a fine acicular ferrite structure.

(Advantageous Effect)

It is thus possible to obtain weld metal having excellent toughness in butt welding of steel plates, while performing high-efficiency welding without deformation or strain. This has an industrially significant advantageous effect.

It is also possible to considerably reduce heat input by the use of laser welding, which has an advantageous effect of improving the toughness of the heat-affected zone (HAZ).

BRIEF DESCRIPTION OF THE DRAWINGS

In the accompanying drawings:

FIG. 1 is a sectional view illustrating an example of a Y groove formed by butting two steel plates 1 together in butt welding according to one of the disclosed embodiments;
FIG. 2 is a sectional view schematically illustrating an example of a weld joint formed by butt welding according to one of the disclosed embodiments;
FIG. 3A is a sectional view illustrating a test piece collecting position; and
FIG. 3B is a sectional view illustrating a test piece collecting position.

DETAILED DESCRIPTION

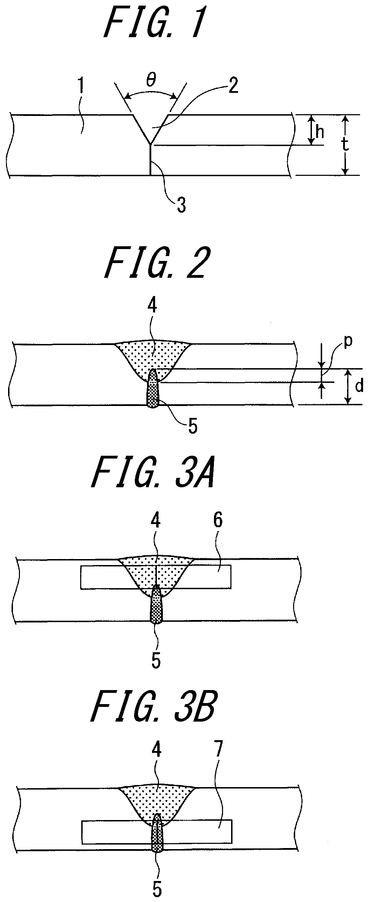

FIG. 1 is a sectional view illustrating an example of a Y groove formed by butting two steel plates 1 together in butt welding according to one of the disclosed embodiments. A region 2 (hereafter referred to as "opening portion") where the side surfaces of the two steel plates 1 do not contact each other is in the upper part of the Y groove, and a region 3 (hereafter referred to as "root face portion") where the steel plates 1 contact each other is in the lower part of the Y groove. The upper part and the lower part are respectively on the upper side and the lower side in FIG. 1.

In FIG. 1, t (mm) is the plate thickness of the steel plates 1, h (mm) is the depth of the opening portion 2 (i.e. groove depth), and $\theta$ (°) is the angle of the opening portion 2 (i.e. groove angle).

A butt welding procedure according to one of the disclosed embodiments is described first.

The two steel plates 1 are butted together to form the Y groove illustrated in FIG. 1, and joined at the opening portion 2 located in the upper part by submerged arc welding. The submerged arc welding is multiple-electrode single-pass welding using a weld material (such as weld wire and flux) containing Ti and B. Submerged arc weld metal 4 illustrated in FIG. 2 is thus formed.

After this, the steel plates 1 are joined at the root face portion 3 located in the lower part of the Y groove by laser welding, to form laser weld metal 5 illustrated in FIG. 2. In FIG. 2, d (mm) is the penetration depth of the laser weld metal 5 in the plate thickness direction, and p (mm) is the entry depth to which the laser weld metal 5 enters into the submerged arc weld metal 4 in the plate thickness direction (that is, the distance from the deepest part of the submerged arc weld metal 4 before the entry of the laser weld metal 5 to the deepest part of the laser weld metal 5 formed as a result of the laser welding, in the plate thickness direction in the cross section of the weld joint as illustrated in FIG. 2). In other words, the laser welding is performed so that the laser weld metal 5 enters into the submerged arc weld metal 4. As a result, inclusions (such as carbide, nitride, and oxide of Ti or B) in the submerged arc weld metal 4 can be taken into the laser weld metal 5, and such inclusions serve as an acicular ferrite product nucleus in the laser weld metal 5. Hence, the laser weld metal 5 of a fine acicular ferrite structure can be formed to improve toughness.

The laser welding conditions are set so that the entry depth p and the penetration depth d satisfy the following expression. In such butt weld joint formation, the inclusions move smoothly from the submerged arc weld metal 4 to the laser weld metal 5. This further improves the toughness of the laser weld metal 5, and further improves the toughness of the butt weld joint. In the expression, [%Ti] is the Ti content (mass%) of the submerged arc weld metal 4.

$$p \geq (0.010/[\%\mathrm{Ti}]) \times d.$$

The actions of Ti, B, Al, and O (oxygen) in the submerged arc weld metal 4 are described next. By performing the submerged arc welding using the weld material having adjusted contents of these elements, the contents of Ti, B, Al, and O (oxygen) in the submerged arc weld metal 4 can be adjusted.

Ti: 0.030 mass% to 0.100 mass%

Ti is an element having an action of generating a fine acicular ferrite structure when forming the submerged arc weld metal 4. Ti also has an action of making the laser weld metal 5 into a fine acicular ferrite structure, too, as a result of its carbide, nitride, and/or oxide moving from the submerged arc weld metal 4 to the laser weld metal 5. If the Ti content of the submerged arc weld metal 4 is less than 0.030 mass%, these effects cannot be achieved. If the Ti content exceeds 0.100 mass%, the toughness of the submerged arc weld metal 4 degrades. The Ti content of the submerged arc weld metal 4 is therefore in the range of 0.030 mass% to 0.100 mass%.

B: 0.0030 mass% to 0.0080 mass%

B is an element having an action of fixing N which is an impurity element in the submerged arc weld metal 4, by combining with N. B also suppresses the generation of coarse ferrite crystal grains, and contributes to improved toughness of the submerged arc weld metal 4. If the B content of the submerged arc weld metal 4 is less than 0.0030 mass%, these effects cannot be achieved. If the B content exceeds 0.0080 mass%, the submerged arc weld metal 4 tends to crack. The B content of the submerged arc weld metal 4 is therefore in the range of 0.0030 mass% to 0.0080 mass%.

[%A1]/[%O]: 0.5 to 1.2

A1 is an element having a deoxidizing action, and is added to the weld material beforehand in order to remove O (oxygen) in the submerged arc weld metal 4. However, if the submerged arc weld metal 4 contains excessive Al, the formation of the Ti oxide-based inclusions which serve as an acicular ferrite product nucleus is hindered. If the submerged arc weld metal 4 lacks Al, the O (oxygen) content of the submerged arc weld metal 4 increases, as a result of which the effect of B decreases and the toughness of the submerged arc weld metal 4 degrades. Since the action of Al depends on the O (oxygen) content, [%A1]/[%O] is in the range of 0.5 to 1.2, where [%A1] is the Al content (mass%) of the submerged arc weld metal 4 and [%O] is the O (oxygen) content (mass%) of the submerged arc weld metal 4.

The plate thickness t of the steel plates 1 is not particularly limited. However, if the plate thickness t is less than 5 mm, burn-through may occur in the submerged arc welding, making it impossible to form a sound butt weld joint. If the plate thickness t exceeds 50 mm, the heat input by the laser welding and the submerged arc welding is excessive, which may lead to a decrease in strength or toughness of the butt weld joint. Accordingly, the plate thickness t of the steel plates 1 is preferably in the range of 5 mm to 50 mm.

If the groove depth h (mm) is too large, the heat input by the submerged arc welding is excessive, which may lead to a decrease in strength or toughness of the butt weld joint. If the groove depth h (mm) is too small, (0.010/[%Ti]) $\times$ d is large, which may cause degraded toughness of the laser weld metal 5. Accordingly, the groove depth h (mm) is preferably in the range of 0.1t to 0.6t, where t is the aforementioned plate thickness t (mm).

If the groove angle $\theta$ (°) is too large, the heat input by the submerged arc welding is excessive, which may lead to a decrease in strength or toughness of the butt weld joint. If the groove angle $\theta$ (°) is too small, the submerged arc welding is unstable, which may hinder the formation of a sound butt weld joint. Accordingly, the groove angle $\theta$ is preferably in the range of 30° to 60°.

EXAMPLES

Two steel plates 1 (plate thickness t: 12 mm, 24 mm, 36 mm) having the components shown in Table 1 were butted together, to form a Y groove as illustrated in FIG. 1. The groove depth h and the groove angle $\theta$ are shown in Table 2. Ceq was calculated by the following expression:

$$Ceq = [\%C] + [\%Mn]/6 + [\%Si]/24$$

where [%C], [%Mn], and [%Si] are respectively the C content, the Mn content, and the Si content in the steel.

[Table 1]

Table 1

| C | Si | Mn | P | S | Ti | Al | N | O | Ceq |
|---|----|----|---|---|----|----|---|---|-----|

(continued)

| C | Si | Mn | P | S | Ti | Al | N | O | Ceq |
|---|---|---|---|---|---|---|---|---|---|
| 0.06 | 0.15 | 1.55 | 0.005 | 0.001 | 0.01 | 0.02 | 0.0045 | 0.0025 | 0.32 |
| Unit: mass% | | | | | | | | | |

The two steel plates were then joined at the opening portion 2 located in the upper part of the Y groove by submerged arc welding (single-pass). The submerged arc welding was performed with two electrodes to ensure the welding amount. The setting conditions are shown in Table 2. The Ti content, B content, and Al content of the wire component used in the submerged arc welding, the $TiO_2$ content, $B_2O_3$ content, and $Al_2O_3$ content of the flux component used in the submerged arc welding, and the Ti content, B content, and [%A1]/[%O] of the submerged arc weld metal 4 are shown in Tables 3 to 5.

The two steel plates were then joined at the root face portion 3 located in the lower part of the Y groove by laser welding. The setting conditions are shown in Table 2.

[Table 2]

[Table 2]

| Welding method | Welding condition | | | Plate thickness t of parts to be welded (mm) | | |
|---|---|---|---|---|---|---|
| | | | | 12 | 24 | 36 |
| Submerged arc welding | Leading electrode | Current | (A) | 550 | 700 | 900 |
| | | Voltage | (V) | 36 | 36 | 36 |
| | | Wire diameter | (mm) | 4 | 4 | 4 |
| | | CTWD* | (mm) | 30 | 30 | 30 |
| | Trailing electrode | Current | (A) | 500 | 600 | 800 |
| | | Voltage | (V) | 38 | 38 | 38 |
| | | Wire diameter | (mm) | 4 | 4 | 4 |
| | | CTWD* | (mm) | 30 | 30 | 30 |
| | Welding speed | | (m/min) | 1.06 | 0.96 | 0.76 |
| | Welding heat input | | (kJ/mm) | 2.2 | 3.0 | 4.4 |
| | Groove shape | Groove angle θ | (°) | 60 | 60 | 60 |
| | | Groove depth h | (mm) | 7.4 | 12.0 | 21.2 |
| Laser welding | Output | | (kW) | 6 | 12 | 15 |
| | Spot diameter | | (mm) | 0.3 | 0.3 | 0.3 |
| | Focus position | | (mm) | -2 | -3 | -4 |
| | Shielding gas | Type | | Ar | Ar | Ar |
| | | Flow rate | (L/min) | 8 | 10 | 10 |
| | Welding speed | | (m/min) | 1.0 | 1.0 | 1.0 |
| *CTWD: Contact Tip to Work Distance (distance between base material and tip) | | | | | | |

A butt weld joint as illustrated in FIG. 2 was thus formed. The cross section of the butt weld joint was observed to measure the penetration depth d and the entry depth p. The measured penetration depth d and entry depth p are shown in Tables 3 to 5. The measured penetration depth d and entry depth p mentioned here are each the average of the measurements of the corresponding depth in any three cross sections of the butt weld joint.

[Table 3]

Table 3

| No. | Plate thickness t (mm) | Wire component Ti (mass%) | Wire component B (mass%) | Wire component Al (mass%) | Flux component TiO2 (mass%) | Flux component B2O3 (mass%) | Flux component Al2O3 (mass%) | SAW*1 Base material dilution rate | Submerged arc weld metal component Ti (mass%) | Submerged arc weld metal component B (mass%) | Submerged arc weld metal component Al (mass%) | Submerged arc weld metal component O (mass%) | Submerged arc weld metal component [%Al]/[%O] | LBW*1 Penetration depth d (mm) | LBW*1 Entry depth p (mm) | (0.010/[%Ti])×d | Charpy impact test result SAW*1 vTrs (°C) | Charpy impact test result LBW*2 vTrs (°C) | Evaluation |
|---|---|---|---|---|---|---|---|---|---|---|---|---|---|---|---|---|---|---|---|
| 1 | 12 | 0.000 | 0.004 | 0.000 | 2.0 | 0.40 | 11.0 | 0.55 | 0.024 | 0.0032 | 0.023 | 0.045 | 0.52 | 6.1 | 1.8 | 2.6 | -40 | 3 | Comparative Example |
| 2 | | 0.102 | 0.004 | 0.000 | 2.5 | 0.40 | 11.0 | 0.55 | 0.029 | 0.0031 | 0.023 | 0.044 | 0.51 | 6.2 | 2.0 | 2.1 | -37 | -6 | Comparative Example |
| 3 | | 0.106 | 0.004 | 0.000 | 4.8 | 0.40 | 11.0 | 0.55 | 0.052 | 0.0032 | 0.024 | 0.046 | 0.51 | 6.1 | 1.9 | 1.2 | -41 | -38 | Example |
| 4 | | 0.110 | 0.004 | 0.000 | 8.2 | 0.40 | 11.0 | 0.55 | 0.083 | 0.0032 | 0.021 | 0.040 | 0.52 | 6.2 | 2.0 | 0.8 | -45 | -38 | Example |
| 5 | | 0.113 | 0.004 | 0.000 | 10.0 | 0.40 | 11.0 | 0.55 | 0.100 | 0.0033 | 0.024 | 0.047 | 0.51 | 6.2 | 2.0 | 0.6 | -43 | -37 | Example |
| 6 | | 0.111 | 0.004 | 0.000 | 11.3 | 0.40 | 11.0 | 0.55 | 0.112 | 0.0033 | 0.022 | 0.043 | 0.51 | 6.1 | 2.1 | 0.5 | -8 | -36 | Comparative Example |
| 7 | | 0.105 | 0.004 | 0.000 | 4.9 | 0.21 | 11.0 | 0.55 | 0.053 | 0.0021 | 0.022 | 0.042 | 0.52 | 6.2 | 1.8 | 1.2 | -41 | -12 | Comparative Example |
| 8 | | 0.108 | 0.004 | 0.000 | 4.9 | 0.29 | 11.0 | 0.55 | 0.053 | 0.0030 | 0.025 | 0.050 | 0.50 | 6.2 | 1.9 | 1.2 | -46 | -42 | Example |
| 9 | | 0.108 | 0.004 | 0.000 | 4.8 | 0.40 | 11.0 | 0.55 | 0.052 | 0.0041 | 0.026 | 0.049 | 0.52 | 6.1 | 2.0 | 1.2 | -47 | -41 | Example |
| 10 | | 0.103 | 0.004 | 0.000 | 5.1 | 0.61 | 11.0 | 0.55 | 0.054 | 0.0062 | 0.022 | 0.044 | 0.51 | 6.2 | 2.1 | 1.2 | -47 | -43 | Example |
| 11 | | 0.107 | 0.004 | 0.000 | 4.9 | 0.81 | 11.0 | 0.55 | 0.053 | 0.0080 | 0.025 | 0.048 | 0.52 | 6.3 | 2.0 | 1.2 | -45 | -39 | Example |
| 12 | | 0.102 | 0.004 | 0.000 | 4.9 | 1.00 | 11.0 | 0.55 | 0.052 | 0.0098 | 0.022 | 0.043 | 0.50 | 6.0 | 2.0 | 1.2 | 2 | -15 | Comparative Example |
| 13 | | 0.100 | 0.004 | 0.000 | 5.1 | 0.40 | 11.0 | 0.55 | 0.054 | 0.0042 | 0.017 | 0.041 | 0.41 | 6.3 | 2.0 | 1.2 | -7 | -6 | Comparative Example |
| 14 | | 0.103 | 0.004 | 0.000 | 4.8 | 0.40 | 11.0 | 0.55 | 0.052 | 0.0043 | 0.022 | 0.043 | 0.50 | 6.1 | 2.0 | 1.2 | -38 | -43 | Example |
| 15 | | 0.100 | 0.004 | 0.000 | 5.1 | 0.40 | 18.5 | 0.55 | 0.054 | 0.0042 | 0.037 | 0.046 | 0.82 | 6.1 | 2.0 | 1.1 | -40 | -38 | Example |
| 16 | | 0.106 | 0.004 | 0.000 | 5.1 | 0.40 | 27.4 | 0.55 | 0.054 | 0.0043 | 0.051 | 0.043 | 1.20 | 6.2 | 1.9 | 1.2 | -41 | -41 | Example |
| 17 | | 0.103 | 0.004 | 0.000 | 4.8 | 0.40 | 32.3 | 0.55 | 0.052 | 0.0041 | 0.067 | 0.047 | 1.41 | 6.2 | 1.8 | 1.2 | -5 | -4 | Comparative Example |
| 18 | | 0.100 | 0.004 | 0.000 | 4.9 | 0.40 | 11.0 | 0.55 | 0.053 | 0.0043 | 0.022 | 0.047 | 0.48 | 6.3 | 1.1 | 1.2 | -2 | -7 | Comparative Example |
| 19 | | 0.105 | 0.004 | 0.000 | 4.8 | 0.40 | 11.0 | 0.55 | 0.052 | 0.0042 | 0.021 | 0.041 | 0.52 | 6.2 | 2.3 | 1.2 | -43 | -36 | Example |
| 20 | | 0.103 | 0.004 | 0.000 | 4.9 | 0.40 | 11.0 | 0.55 | 0.053 | 0.0042 | 0.023 | 0.044 | 0.51 | 6.2 | 3.3 | 1.2 | -43 | -41 | Example |
| 21 | | 0.107 | 0.004 | 0.000 | 5.1 | 0.40 | 11.0 | 0.55 | 0.054 | 0.0042 | 0.024 | 0.047 | 0.51 | 6.1 | 4.0 | 1.2 | -40 | -37 | Example |
| 22 | | 0.106 | 0.004 | 0.000 | 5.1 | 0.40 | 11.0 | 0.55 | 0.053 | 0.0043 | 0.024 | 0.047 | 0.51 | 6.2 | 5.5 | 1.2 | -41 | -43 | Example |
| 23 | | 0.104 | 0.004 | 0.000 | 4.8 | 0.40 | 11.0 | 0.55 | 0.051 | 0.0041 | 0.022 | 0.042 | 0.51 | 6.2 | 6.3 | 1.2 | -40 | -43 | Example |

*1 Submerged arc welding, *2 Laser welding

[Table 4]

Table 4

| No. | Plate thickness t (mm) | Wire component | | | Flux component | | | SAW Base material dilution rate | Submerged arc weld metal component | | | | | LBW | | (0.010/[%Ti])×d | Charpy impact test result | | Evaluation |
|---|---|---|---|---|---|---|---|---|---|---|---|---|---|---|---|---|---|---|---|
| | | Ti (mass%) | B (mass%) | Al (mass%) | TiO2 (mass%) | B2O3 (mass%) | Al2O3 (mass%) | | Ti (mass%) | B (mass%) | Al (mass%) | O (mass%) | [%Al]/[%O] | Penetration depth d (mm) | Entry depth p (mm) | | SAW vTrs (°C) | LBW vTrs (°C) | |
| 24 | | 0.000 | 0.004 | 0.000 | 5.1 | 0.40 | 11.0 | 0.55 | 0.052 | 0.0041 | 0.023 | 0.048 | 0.48 | 12.0 | 1.8 | 2.3 | -3 | -7 | Comparative Example |
| 25 | | 0.102 | 0.004 | 0.000 | 4.7 | 0.40 | 11.0 | 0.55 | 0.051 | 0.0042 | 0.025 | 0.048 | 0.52 | 11.9 | 2.2 | 2.3 | -34 | -32 | Example |
| 26 | | 0.102 | 0.004 | 0.000 | 4.8 | 0.40 | 11.0 | 0.55 | 0.053 | 0.0041 | 0.021 | 0.040 | 0.51 | 12.2 | 3.2 | 2.3 | -43 | -45 | Example |
| 27 | | 0.104 | 0.004 | 0.000 | 5.1 | 0.40 | 11.0 | 0.55 | 0.053 | 0.0042 | 0.025 | 0.048 | 0.52 | 12.1 | 4.3 | 2.3 | -43 | -47 | Example |
| 28 | | 0.103 | 0.004 | 0.000 | 4.9 | 0.40 | 11.0 | 0.55 | 0.053 | 0.0042 | 0.022 | 0.043 | 0.51 | 11.8 | 5.3 | 2.2 | -43 | -45 | Comparative Example |
| 29 | | 0.102 | 0.004 | 0.000 | 1.7 | 0.29 | 11.0 | 0.55 | 0.024 | 0.0031 | 0.023 | 0.045 | 0.52 | 12.1 | 3.2 | 5.1 | -46 | -4 | Comparative Example |
| 30 | | 0.103 | 0.004 | 0.000 | 2.8 | 0.29 | 11.0 | 0.55 | 0.034 | 0.0032 | 0.025 | 0.049 | 0.52 | 11.7 | 3.3 | 3.4 | -31 | -32 | Example |
| 31 | | 0.105 | 0.004 | 0.000 | 6.0 | 0.32 | 11.0 | 0.55 | 0.063 | 0.0033 | 0.024 | 0.047 | 0.52 | 12.1 | 3.0 | 1.9 | -48 | -47 | Example |
| 32 | 24 | 0.105 | 0.004 | 0.000 | 11.0 | 0.19 | 11.0 | 0.55 | 0.111 | 0.0032 | 0.024 | 0.047 | 0.51 | 11.7 | 3.1 | 1.1 | -7 | -41 | Comparative Example |
| 33 | | 0.101 | 0.004 | 0.000 | 4.8 | 0.40 | 11.0 | 0.55 | 0.052 | 0.0022 | 0.025 | 0.049 | 0.52 | 12.1 | 3.2 | 2.3 | -41 | -6 | Comparative Example |
| 34 | | 0.104 | 0.004 | 0.000 | 4.9 | 0.40 | 11.0 | 0.55 | 0.053 | 0.0040 | 0.025 | 0.048 | 0.51 | 11.8 | 3.1 | 2.2 | -45 | -40 | Example |
| 35 | | 0.100 | 0.004 | 0.000 | 4.9 | 0.61 | 11.0 | 0.55 | 0.051 | 0.0061 | 0.024 | 0.048 | 0.51 | 12.1 | 3.0 | 2.4 | -44 | -46 | Example |
| 36 | | 0.107 | 0.004 | 0.000 | 5.1 | 0.90 | 11.0 | 0.55 | 0.054 | 0.0090 | 0.021 | 0.041 | 0.52 | 12.2 | 2.9 | 2.3 | -7 | -36 | Comparative Example |
| 37 | | 0.105 | 0.004 | 0.000 | 4.9 | 0.40 | 11.0 | 0.55 | 0.053 | 0.0032 | 0.020 | 0.048 | 0.42 | 12.0 | 3.1 | 2.3 | -5 | -5 | Comparative Example |
| 38 | | 0.105 | 0.004 | 0.000 | 4.9 | 0.40 | 11.0 | 0.55 | 0.053 | 0.0031 | 0.021 | 0.040 | 0.52 | 11.9 | 2.8 | 2.3 | -44 | -45 | Example |
| 39 | | 0.102 | 0.004 | 0.000 | 4.8 | 0.40 | 25.9 | 0.55 | 0.052 | 0.0033 | 0.053 | 0.045 | 1.18 | 12.1 | 3.1 | 2.3 | -48 | -44 | Example |
| 40 | | 0.101 | 0.004 | 0.000 | 4.8 | 0.40 | 31.2 | 0.55 | 0.052 | 0.0033 | 0.068 | 0.048 | 1.42 | 12.0 | 3.0 | 2.3 | -11 | -4 | Comparative Example |

*1 Submerged arc welding, *2 Laser welding

[Table 5]

Table 5

| No. | Plate thickness t (mm) | Wire component | | | Flux component | | | SAW Base material dilution rate | Submerged arc weld metal component | | | | | LBW | | (0.010/[%Ti])×d | Charpy impact test result | | Evaluation |
|---|---|---|---|---|---|---|---|---|---|---|---|---|---|---|---|---|---|---|---|
| | | Ti (mass%) | B (mass%) | Al (mass%) | TiO₂ (mass%) | B₂O₃ (mass%) | Al₂O₃ (mass%) | | Ti (mass%) | B (mass%) | Al (mass%) | O (mass%) | [%Al]/[%O] | Penetration depth d (mm) | Entry depth p (mm) | | SAW vTrs (°C) | LBW vTrs (°C) | |
| 41 | | 0.000 | 0.000 | 0.000 | 5.1 | 0.40 | 11.0 | 0.55 | 0.053 | 0.0042 | 0.020 | 0.042 | 0.48 | 14.1 | 2.1 | 2.6 | -29 | -1 | Comparative Example |
| 42 | | 0.000 | 0.000 | 0.000 | 5.2 | 0.40 | 11.0 | 0.55 | 0.054 | 0.0043 | 0.021 | 0.040 | 0.52 | 13.9 | 4.2 | 2.6 | -44 | -39 | Example |
| 43 | | 0.102 | 0.000 | 0.000 | 4.9 | 0.40 | 11.0 | 0.55 | 0.053 | 0.0042 | 0.021 | 0.040 | 0.52 | 13.9 | 6.3 | 2.6 | -40 | -42 | Example |
| 44 | | 0.102 | 0.000 | 0.000 | 4.9 | 0.40 | 11.0 | 0.55 | 0.052 | 0.0042 | 0.025 | 0.047 | 0.52 | 14.1 | 8.2 | 2.7 | -36 | -44 | Example |
| 45 | | 0.103 | 0.000 | 0.000 | 5.1 | 0.40 | 11.0 | 0.55 | 0.052 | 0.0041 | 0.024 | 0.046 | 0.52 | 14.1 | 10.1 | 2.7 | -38 | -42 | Example |
| 46 | | 0.101 | 0.000 | 0.000 | 1.7 | 0.40 | 11.0 | 0.55 | 0.023 | 0.0041 | 0.024 | 0.047 | 0.52 | 14.0 | 4.0 | 6.1 | -43 | -3 | Comparative Example |
| 47 | 36 | 0.101 | 0.000 | 0.000 | 2.8 | 0.40 | 11.0 | 0.55 | 0.033 | 0.0042 | 0.022 | 0.042 | 0.51 | 14.1 | 4.3 | 4.3 | -39 | -37 | Example |
| 48 | | 0.103 | 0.000 | 0.000 | 6.1 | 0.40 | 11.0 | 0.55 | 0.064 | 0.0043 | 0.023 | 0.044 | 0.51 | 14.1 | 4.0 | 2.2 | -41 | -44 | Example |
| 49 | | 0.103 | 0.000 | 0.000 | 10.6 | 0.40 | 11.0 | 0.55 | 0.106 | 0.0041 | 0.023 | 0.045 | 0.52 | 14.2 | 4.3 | 1.3 | 2 | -35 | Comparative Example |
| 50 | | 0.101 | 0.000 | 0.000 | 4.8 | 0.23 | 11.0 | 0.55 | 0.051 | 0.0022 | 0.021 | 0.041 | 0.51 | 13.9 | 4.2 | 2.7 | -34 | -1 | Comparative Example |
| 51 | | 0.101 | 0.000 | 0.000 | 4.9 | 0.40 | 11.0 | 0.55 | 0.053 | 0.0041 | 0.025 | 0.049 | 0.52 | 13.9 | 3.9 | 2.6 | -43 | -39 | Example |
| 52 | | 0.104 | 0.000 | 0.000 | 4.9 | 0.61 | 11.0 | 0.55 | 0.052 | 0.0061 | 0.023 | 0.045 | 0.52 | 14.0 | 3.8 | 2.7 | -40 | -41 | Example |
| 53 | | 0.103 | 0.000 | 0.000 | 5.1 | 0.93 | 11.0 | 0.55 | 0.054 | 0.0092 | 0.021 | 0.041 | 0.52 | 13.9 | 3.9 | 2.6 | -9 | -43 | Comparative Example |
| 54 | | 0.100 | 0.000 | 0.000 | 4.8 | 0.40 | 11.0 | 0.55 | 0.051 | 0.0043 | 0.019 | 0.046 | 0.41 | 13.9 | 4.0 | 2.7 | 7 | 3 | Comparative Example |
| 55 | | 0.103 | 0.000 | 0.000 | 4.9 | 0.40 | 11.0 | 0.55 | 0.053 | 0.0043 | 0.025 | 0.048 | 0.52 | 14.2 | 3.8 | 2.7 | -42 | -33 | Example |
| 56 | | 0.103 | 0.000 | 0.000 | 4.9 | 0.40 | 25.3 | 0.55 | 0.052 | 0.0041 | 0.059 | 0.049 | 1.19 | 14.1 | 3.9 | 2.7 | -38 | -41 | Example |
| 57 | | 0.102 | 0.000 | 0.000 | 4.9 | 0.40 | 30.1 | 0.55 | 0.053 | 0.0041 | 0.070 | 0.049 | 1.41 | 14.0 | 4.2 | 2.6 | 2 | 0 | Comparative Example |

*1 Submerged arc welding, *2 Laser welding

Next, a test piece was collected from each butt weld joint, and subjected to a Charpy impact test according to JIS Z3111. FIGS. 3A and 3B each illustrate a test piece collecting position. A test piece 6 for examining the toughness of the submerged arc weld metal 4 and a test piece 7 for examining the toughness of the laser weld metal 5 each had a notch position at the center of the weld metal. The obtained $_vT_{rs}$ is shown in Tables 3 to 5.

The toughness of each of the submerged arc weld metal 4 and the laser weld metal 5 was evaluated by the following criteria regarding $_vT_{rs}$.

Accepted (excellent): $_vT_{rs} \leq$ -35 °C.

Accepted: -35 °C $< _vT_{rs} \leq$ -30 °C.

Rejected: -30 °C $< _vT_{rs}$.

As is clear from Tables 3 to 5, in Comparative Examples No. 1, 2, 29, and 46, the Ti content of the submerged arc weld metal 4 was below the appropriate range, and so $_vT_{rs}$ of the laser weld metal 5 was high. This means degradation in toughness of the butt weld joint. In Comparative Examples No. 6, 32, and 49, the Ti content of the submerged arc weld metal 4 exceeded the appropriate range, and so $_vT_{rs}$ of the submerged arc weld metal 4 was high. This means degradation in toughness of the butt weld joint.

In the Examples, on the other hand, the Ti content of the submerged arc weld metal 4 was in the appropriate range, and so the submerged arc weld metal 4 and the laser weld metal 5 both had favorable toughness.

In Comparative Examples No. 7, 33, and 50, the B content of the submerged arc weld metal 4 was below the appropriate range, and so $_vT_{rs}$ of the laser weld metal 5 was high. This means degradation in toughness of the butt weld joint. In Comparative Examples No. 12, 36, and 53, the B content of the submerged arc weld metal 4 exceeded the appropriate range, and so $_vT_{rs}$ of the submerged arc weld metal 4 was high. This means degradation in toughness of the butt weld joint.

In the Examples, on the other hand, the B content of the submerged arc weld metal 4 was in the appropriate range, and so the submerged arc weld metal 4 and the laser weld metal 5 both had favorable toughness.

In Comparative Examples No. 13, 18, 24, 37, 41, and 54, [%A1]/[%O] of the submerged arc weld metal 4 was below the appropriate range, and so $_vT_{rs}$ of each of the submerged arc weld metal 4 and laser weld metal 5 was high. This means degradation in toughness of the butt weld joint. In Comparative Examples No. 17, 40, and 57, [%A1]/[%O] of the submerged arc weld metal 4 exceeded the appropriate range, and so $_vT_{rs}$ of each of the submerged arc weld metal 4 and laser weld metal 5 was high. This means degradation in toughness of the butt weld joint.

In the Examples, on the other hand, [%A1]/[%O] of the submerged arc weld metal 4 was in the appropriate range, and so the submerged arc weld metal 4 and the laser weld metal 5 both had favorable toughness.

In particular, in the Examples with the entry depth p satisfying the predetermined relation, $_vT_{rs}$ of each of the submerged arc weld metal 4 and laser weld metal 5 was $_vT_{rs} \leq$ -35 °C, showing excellent toughness.

REFERENCE SIGNS LIST

1 steel plate
2 opening portion
3 root face portion
4 submerged arc weld metal
5 laser weld metal
6 test piece of submerged arc weld metal
7 test piece of laser weld metal

**Claims**

**1.** A method of butt welding steel plates, the method comprising:

butting two steel plates (1) together, to form a Y groove having an opening portion (2) in an upper part and a root face portion (3) in a lower part; and
joining the two steel plates (1) at the opening portion (2) of the Y groove by submerged arc welding, to form submerged arc weld metal (4) whose Ti content is 0.030 mass% to 0.100 mass%, B content is 0.0030 mass% to 0.0080 mass%, and [%A1]/[%O] is in a range of 0.5 to 1.2 where [%A1] is Al content in mass% and [%O] is O content in mass%; and **characterized by** further comprising
joining the two steel plates (1) at the root face portion (3) of the Y groove by laser welding, to form laser weld metal (5) so that the laser weld metal enters into the submerged arc weld metal (4).

2. The method of butt welding steel plates (1) according to claim 1,
   wherein [%Ti], d, and p satisfy

$$p \geq (0.010 \,/\, [\%Ti]) \times d$$

where [%Ti] is the Ti content of the submerged arc weld metal (4) in mass%, d is a penetration depth of the laser welding in mm, and p is an entry depth to which the laser weld metal (5) enters into the submerged arc weld metal (4) in mm.

3. A butt weld joint of steel plates (1) that is formed by joining by the method of butt welding steel plates according to claim 1 or 2, wherein the butt weld joint comprises submerged arc weld metal (4) formed as a larger weld portion in the opening portion (2) and laser weld metal (5) formed as a smaller weld portion in the root face portion (3), and wherein the smaller weld portion extends into the larger weld portion in the plate thickness direction and has a fine acicular ferrite structure.


**Patentansprüche**

1. Verfahren zum Stumpfschweißen von Stahlplatten, wobei das Verfahren umfasst:

   stumpfes Aneinanderstoßen von zwei Stahlplatten (1), um eine Y-Fuge mit einem Öffnungsabschnitt (2) in einem oberen Teil und einem Stegflankenabschnitt (3) in einem unteren Teil zu bilden; und
   Verbinden der beiden Stahlplatten (1) an dem Öffnungsabschnitt (2) der Y-Fuge durch Unterpulverschweißen, um ein Schweißgut (4) des Unterpulverschweißens zu bilden, dessen Ti-Gehalt 0,030 Massen-% bis 0,100 Massen-% beträgt, dessen B-Gehalt 0,0030 Massen-% bis 0,0080 Massen-% beträgt und dessen [%Al]/[%O] in einem Bereich von 0,5 bis 1,2 liegt, wobei [%Al] der Al-Gehalt in Massen-% und [%0] der O-Gehalt in Massen-% ist; und **dadurch gekennzeichnet ist, dass** es ferner umfasst
   Verbinden der beiden Stahlplatten (1) am Stegflankenabschnitt (3) der Y-Fuge durch Laserschweißen, um Laserschweißgut (5) zu bilden, sodass das Laserschweißgut in das Schweißgut (4) des Unterpulverschweißens eintritt.

2. Verfahren zum Stumpfschweißen von Stahlplatten (1) nach Anspruch 1,
   wobei [%Ti], d und p die Bedingung

$$p \geq (0.010/[\%Ti]) \times d \text{ erfüllen,}$$

wobei [%Ti] der Ti-Gehalt des Schweißguts (4) des Unterpulverschweißens in Masse-% ist, d eine Eindringtiefe des Laserschweißens in mm ist und p eine Eindringtiefe in mm ist, bis zu der das Laserschweißgut (5) in das Schweißgut (4) des Unterpulverschweißens eindringt.

3. Stumpfschweißverbindung von Stahlplatten (1), die durch Verbinden durch das Verfahren des Stumpfschweißens von Stahlplatten nach Anspruch 1 oder 2 gebildet wird, wobei die Stumpfschweißverbindung Schweißgut (4) des Unterpulverschweißens, das als ein größerer Schweißabschnitt in dem Öffnungsabschnitt (2) gebildet wird, und Laserschweißgut (5), das als ein kleinerer Schweißabschnitt in dem Stegflankenabschnitt (3) gebildet wird, umfasst, und wobei sich der kleinere Schweißabschnitt in den größeren Schweißabschnitt in Richtung der Plattendicke erstreckt und eine feine nadelförmige Ferritstruktur aufweist.


**Revendications**

1. Procédé de soudage bout à bout de plaques d'acier, le procédé comprenant les étapes consistant à :

   abouter deux plaques d'acier (1) ensemble, pour former une rainure en forme de Y ayant une partie d'ouverture (2) dans une partie supérieure et une partie de talon (3) dans une partie inférieure ; et
   joindre les deux plaques d'acier (1) au niveau de la partie d'ouverture (2) de la rainure en forme de Y par soudage à l'arc submergé, pour former un métal soudé à l'arc submergé (4) dont la teneur en Ti est de 0,030 % en masse à 0,100 % en masse, la teneur en B est de 0,0030 % en masse à 0,0080 % en masse, et [% d'Al]/[% d'O] est dans une plage de 0,5 à 1,2 où [% d'Al] est la teneur en Al en % en masse et [% d'O] est la teneur en O en % en masse ; et **caractérisé en ce qu'**il comprend en outre l'étape consistant à joindre les deux plaques d'acier (1) au niveau de la partie de talon (3) de la rainure en forme Y par soudage au laser, pour former du métal soudé au laser (5) de sorte que le métal soudé au laser pénètre dans le métal soudé à l'arc submergé (4).

2. Procédé de soudage bout à bout de plaques d'acier (1) selon la revendication 1, dans lequel [% de Ti], d et p satisfont

$$P \geq (0{,}010/[\% \text{ de Ti}]) \times d$$

dans lequel [% de Ti] est la teneur en Ti du métal soudé à l'arc submergé (4) en % en masse, d est une profondeur de pénétration du soudage au laser en mm, et p est une profondeur d'entrée à laquelle le métal soudé au laser (5) pénètre dans le métal soudé à l'arc submergé (4) en mm.

3. Joint de soudage bout à bout de plaques d'acier (1) qui est formé par jonction par l'intermédiaire du procédé de soudage bout à bout de plaques d'acier selon la revendication 1 ou 2, dans lequel le joint de soudage bout à bout comprend du métal soudé à l'arc submergé (4) formé sous la forme d'une partie soudée plus grande portion dans la partie d'ouverture (2) et du métal soudé au laser (5) formé sous la forme d'une partie soudée plus petite dans la partie de talon (3), et dans lequel la partie soudée plus petite s'étend dans la partie soudée plus grande dans la direction d'épaisseur de plaque et a une structure ferritique aciculaire fine.

# FIG. 1

# FIG. 2

# FIG. 3A

# FIG. 3B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003200284 A
- JP 2008184672 A
- JP 2008168319 A
- JP H6114587 A
- JP 2008248315 A
- JP H9168878 B
- JP 2013119658 A